# EUROPÄISCHE PATENTSCHRIFT

(11) **EP 2 707 246 B1**
(45) Veröffentlichungstag und Bekanntmachung des Hinweises auf die Patenterteilung: **08.07.2015**
(21) Anmeldenummer: 12720421.2
(22) Anmeldetag: 08.05.2012
(51) Int. Cl.: B60L 11/18, B60R 16/02, B62D 5/04, B60W 30/09, B60R 16/03, B62D 6/00

(54) **VERFAHREN ZUM BETREIBEN EINES KRAFTWAGENS MIT EINEM FAHRERASSISTENZSYSTEM**
METHOD FOR OPERATING A MOTOR CAR WITH A DRIVER ASSISTANCE SYSTEM
PROCÉDÉ PERMETTANT DE FAIRE FONCTIONNER UN VÉHICULE AUTOMOBILE ÉQUIPÉ D'UN SYSTÈME D'AIDE À LA CONDUITE

(30) Priorität: 13.05.2011 DE 102011101591
(43) Veröffentlichungstag der Anmeldung: 19.03.2014
(73) Patentinhaber: Audi AG, 85045 Ingolstadt (DE)
(72) Erfinder: WESENBERG, Andé, 85354 Freising (DE); REDEKER, Michael, 85084 Reichertshofen (DE)
(86) Internationale Anmeldenummer: PCT/EP2012/001964
(87) Internationale Veröffentlichungsnummer: WO 2012/156040

(56) Entgegenhaltungen:
- DE-A1-102006 026 404
- DE-A1-102009 058 035
- US-A1- 2003 204 294
- US-A1- 2004 148 075
- US-A1- 2009 312 910
- US-A1- 2010 222 984

## Beschreibung

Die Erfindung betrifft ein Verfahren zum Betreiben eines Kraftwagens, bei welchem mittels eines Fahrerassistenzsystems Lenkeingriffe durchgeführt werden.

Solche Verfahren sind Stand der Technik: In bestimmten Fahrsituationen, beispielsweise beim Einparken, Rangieren oder beim Spurwechsel, werden mittels elektrischer Lenkaktoren Zusatzmomente auf die Lenkung ausgeübt, die den Fahrer bei seinen eigenen Lenkbewegungen unterstützen sollen. Gegebenfalls kann die Lenkung auch vollständig von einem Fahrerassistenzsystem durchgeführt werden, wie dies von automatischen Einparksystemen bekannt ist.

Um das gewünschte Zusatzlenkmoment bereitstellen zu können, muss der elektrische Lenkaktor Energie aufwenden, die dem Bordnetz des Kraftwagens entnommen wird. Kann die notwendige Leistung nicht bereitgestellt werden, so kann der Lenkeingriff nicht im gewünschten Ausmaß oder gar nicht durchgeführt werden, so dass von dem Fahrerassistenzsystem vorgegebene Regelziele nicht erreicht werden und gegebenenfalls Komforteinbußen aufgrund der erschwerten Lenkung auftreten können. Aus der EP 1 950 121 A2 ist daher bekannt, bereits im Vorfeld eines durchzuführenden Lenkeingriffs die Leistungsabgabe eines Generators im Bordnetz durch Bereitstellen einer gewissen Blindleistung zu erhöhen. Erfolgt dann der Lenkeingriff, so wird die Blindleistung abgebaut, so dass der Leistungsanstieg aufgrund des Lenkeingriffs geringer ausfällt und der Fahrkomfort verbessert wird. Auch hier kann jedoch nicht sichergestellt werden, dass die benötigte Leistung vollständig bereitgestellt wird.

Aus der US 2004/0148075 A1, der US 2009/0312910 A1 und der US 2010/0222984 A1 sind jeweilige Verfahren bekannt, bei denen vor Aktivierung einer Lenkkraftunterstützung zusätzliche Leistung im Bordnetz bereitgestellt werden.

Die DE 10 2006 026 404 A1 beschreibt ein Verfahren, bei welchem bei bestimmten vorgegebenen Betriebszuständen des Kraftwagens der Leistungsverbrauch zumindest eines Verbrauchers im Bordnetz gesenkt wird.

Der nächstliegende Stand der Technik ist in der US 2004/148075 A1 zu sehen.

Neben den beschriebenen Anforderungen an das elektrische Bordnetz sind noch weitere Betriebsparameter des Kraftwagens für solche Lenkeingriffe von Bedeutung. Hierzu zählt beispielsweise das Verhältnis der Lenkwinkel an den Achsen des Kraftwagens. Soll beispielsweise aus einer Fahrsituation heraus, in welcher Vorder- und Hinterachse des Kraftwagens gegensinnig gelenkt werden, ein Lenkeingriff durchgeführt werden, in welchem eine gleichsinnige Lenkung der Achsen benötigt wird, so ist dies nicht ohne weiteres verzögerungsfrei durchzuführen.

Der vorliegenden Erfindung liegt somit die Aufgabe zugrunde, ein Verfahren der eingangs genannten Art bereitzustellen, welches sicherstellt, dass gewünschte Lenkeingriffe durch ein Fahrerassistenzsystem zuverlässig und vollständig ausgeführt werden können.

Diese Aufgabe wird durch ein Verfahren mit den Merkmalen des Patentanspruchs 1 gelöst.

Bei einem solchen Verfahren zum Betreiben eines Kraftwagens wird bei Vorliegen wenigstens einer vorgegebenen Fahrsituation ein zugeordneter Lenkeingriff durch ein Fahrerassistenzsystem durchgeführt. Um eine vollständige Durchführung des Lenkeingriffs sicherzustellen, wird eine Prognose bzgl. des Eintretens der wenigstens einen vorgegebenen Fahrsituation in Abhängigkeit von zumindest einem vorgegebenen Kriterium erstellt und in Abhängigkeit von der Prognose zumindest ein für den Lenkeingriff relevanter Betriebsparameter des Kraftwagens vor dem Durchführen des Lenkeingriffs auf einen zum Durchführen des Lenkeingriffs notwendigen vorgegebenen Wert eingestellt.

Somit wird bereits vor Durchführung des Lenkeingriffs ein Betriebszustand des Kraftwagens geschaffen, in welchem sichergestellt ist, dass der Lenkeingriff frei von Beeinträchtigungen durchgeführt werden kann. Dies gewährleistet einen hohen Fahrkomfort und verbessert die Fahrsicherheit durch ein gleichbleibend gutes Lenkgefühl. Ferner kann so sichergestellt werden, dass von Fahrerassistenzsystemen vorgegebene Regelziele zuverlässig erreicht werden.

Weiterhin wird als zumindest ein für den Lenkeingriff relevanter Betriebsparameter ein Lenkwinkel an einer Hinterachse und/oder einer Vorderachse des Kraftwagens gewählt. Hierdurch kann ein Lenkzustand des Kraftwagens bereits im Vorfeld des durchzuführenden Lenkeingriffs an die notwendigen Lenkbewegungen angepasst werden. Beispielsweise kann so aus Fahrsituationen, in welchen Vorder- und Hinterachse des Kraftwagens gegensinnig gelenkt werden, schnell zu einem Lenkeingriff übergegangen werden, bei welchem ein gleichsinniger Lenkwinkel notwendig ist.

Vorzugsweise ist die wenigstens eine vorgegebene Fahrsituation ein Spurwechsel, ein Einparkvorgang, ein Ausparkvorgang, ein Ausweichvorgang oder ein Rangiervorgang. Die genannten Fahrsituationen benötigen allesamt relativ starke Lenkbewegungen, so dass hier die Unterstützung durch Lenkeingriffe eines Fahrerassistenzsystems besonders sinnvoll sowohl bzgl. des Fahrkomforts als auch bzgl. der Fahrsicherheit ist.

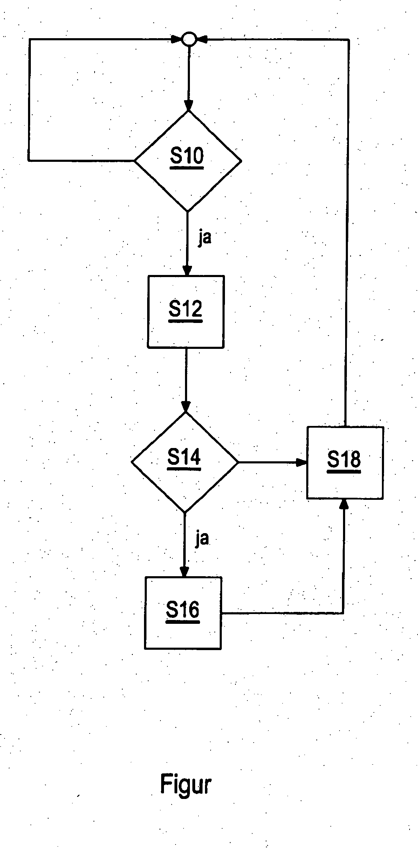

Im Folgenden wird die Erfindung und ihre Ausführungsformen anhand der Zeichnung näher erläutert. Die einzige Figur zeigt hierbei ein schematisches Ablaufdiagramm für ein Ausführungsbeispiel eines erfindungsgemäßen Verfahrens.

Um in bestimmten Fahrsituationen eines Kraftwagens, in denen eine Lenkunterstützung durch einen elektrischen Lenkaktor erforderlich ist, sicherzustellen, dass die gewünschte Lenkunterstützung auch ausgeführt werden kann, wird in einem ersten Verfahrensschritt S10 kontinuierlich der Fahrzustand des Kraftwagens überwacht. Um bevorstehende Fahrsituationen vorherzusagen, werden dabei Zustandsgrößen der Lenkung, insbesondere ein Lenkradwinkel, eine Lenkradwinkelgeschwindigkeit, ein Überlagerungswinkel einer Dynamiklenkung und die Geschwindigkeit seiner Änderung, sowie ein Lenkmoment, beobachtet.

Auch Zustandsgrößen des Antriebsstranges, wie beispielsweise die Fahrzeuggeschwindigkeit, Motordrehzahl, Raddrehzahlen, Getriebeeinstellungen und dgl. können in die Vorhersage mit eingehen. Weitere relevante Größen betreffen das elektrische System des Fahrzeugs. Hier sind insbesondere die Bordnetzspannung und Informationen über Ereignisse im elektrischen System des Kraftwagens, wie beispielsweise die Betätigung eines Anlassers, die Aktivität einer Start-Stop-Automatik und ähnliches von Bedeutung. Auch die Aktivierung von Fahrerassistenzsystemen, beispielsweise einer Einparkhilfe, durch den Fahrer können in die Vorhersage mit einfließen.

Schließlich fließen auch Umgebungsinformationen, wie beispielsweise die geographische Position des Kraftwagens, Messdaten von Abstandssensoren oder Umgebungskameras und dgl. mit in die Überwachung ein.

Wird anhand der überwachten Betriebsparameter festgestellt, dass eine bestimmte Fahrsituation, wie beispielsweise das Gegebensein eines Fahrspurwechsel, eines Ausweichmanövers, eines Einpark-, Auspark- oder Rangiervorgangs, unmittelbar bevorsteht, so werden im folgenden Verfahrensschritt S12 Maßnahmen getroffen, die den Kraftwagen auf die in dieser Fahrsituation notwendigen Lenkeingriffe vorbereiten.

Insbesondere wird in diesem Verfahrensschritt sichergestellt, dass das Bordnetz des Kraftwagens die für den durchzuführenden Lenkeingriff notwendige elektrische Leistung bereitstellen kann. Hierzu kann sowohl die Leistungsabgabe eines Generators im Bordnetz erhöht als auch die Leistungsentnahme nichtessentieller Verbraucher im Bordnetz verringert werden. Um die Bereitstellung der notwendigen Leistung durch den Generator zu sichern, kann ferner ein entsprechendes Zusatzmoment durch die Brennkraftmaschine des Kraftwagens bereitgestellt werden. Dem elektrischen Lenkaktor steht dann beim Eintreten der vorhergesagten Fahrsituation die notwendige Leistung zur Verfügung. Auch der Lenkwinkel einer Hinterachse wird in Schritt S12 angepasst, um den bevorstehenden Lenkeingriff zu ermöglichen, bzw. zu erleichtern.

Nach diesen Anpassungen erfolgt in Verfahrensschritt S14 eine Prüfung, ob die vorhergesagte Fahrsituation tatsächlich eintritt. Ist dies der Fall, so wird in Schritt S16 der zum Bewältigen der Fahrsituation notwendige Lenkeingriff mittels des elektrischen Lenkaktors durchgeführt. Nach Ende des Lenkeingriffs können die in Schritt S12 veränderten Betriebsgrößen des Kraftwagens in Schritt S18 wieder auf ihre ursprünglichen Werte rückgesetzt werden, bzw. wieder einer unabhängigen Steuerung oder Regelung übergeben werden. Anschließend wird wieder zur Überwachung des Fahrzustandes in Schritt S10 zurückgekehrt.

Tritt entgegen der Vorhersage die Fahrsituation nicht ein, so kann - gegebenenfalls nach einer gewissen Wartezeit - unmittelbar mit Schritt S18 fortgefahren werden.

## Patentansprüche

1. Verfahren zum Betreiben eines Kraftwagens, bei welchem bei Vorliegen wenigstens einer vorgegebenen Fahrsituation ein zugeordneter Lenkeingriff durch ein Fahrerassistenzsystem durchgeführt wird, wobei eine Prognose bzgl. des Eintretens der wenigstens einen vorgegebenen Fahrsituation in Abhängigkeit von zumindest einem vorgegebenen Kriterium erstellt und in Abhängigkeit von der Prognose zumindest ein für den Lenkeingriff relevanter Betriebsparameter des Kraftwagens vor dem Durchführen des Lenkeingriffs auf einen zum Durchführen des Lenkeingriffs notwendigen vorgegebenen Wert eingestellt wird,
**dadurch gekennzeichnet, dass**
der zumindest eine für den Lenkeingriff relevante Betriebsparameter ein Lenkwinkel an einer Hinterachse und/oder einer Vorderachse des Kraftwagens ist.

2. Verfahren nach Anspruch 1,
**dadurch gekennzeichnet, dass**
die wenigstens eine vorgegebene Fahrsituation des Gegebensein eines Spurwechsels, eines Einparkvorgangs, eines Ausparkvorgangs, eines Ausweichvorgangs oder eines Rangiervorgangs ist.

## Claims

1. Method for operating a motor vehicle, in which method a corresponding steering intervention is executed by a driver assistance system in the presence of at least one predefined driving situation, a prediction in relation to the occurrence of the at least one predefined driving situation being produced depending on at least one predefined criterion, and depending on said prediction at least one operating parameter, which is relevant to the steering intervention, of the motor vehicle being set to a predefined value required for executing the steering intervention before the execution of the steering intervention, **characterised in that** the at least one operating parameter relevant to the steering intervention is a steering angle on a rear axle and/or a front axle of the motor vehicle.

2. Method according to claim 1, **characterised in that** the at least one predefined driving situation is a lane change, a parking procedure, a parking space departure, an evasive action, or a manoeuvring procedure.

## Revendications

1. Procédé permettant de faire fonctionner un véhicule automobile, pour lequel en cas de présence d'au moins une situation de déplacement prescrite, une intervention de direction associée est réalisée par un système d'assistance au conducteur, une prévision relative à l'entrée de l'au moins une situation de déplacement prescrite étant établie en fonction de l'au moins un critère prescrit et en fonction de la prévision, au moins un paramètre de fonctionnement pertinent pour l'intervention de direction du véhicule automobile étant réglé avant la réalisation de l'intervention de direction à une valeur prescrite nécessaire à la réalisation de l'intervention de direction,
**caractérisé en ce que**
l'au moins un paramètre de fonctionnement pertinent pour l'intervention de direction est un angle de direction sur un essieu arrière et/ou un essieu avant du véhicule automobile.

2. Procédé selon la revendication 1,
**caractérisé en ce que**
l'au moins une situation de déplacement prescrite est la présence d'un changement de voie, d'un processus de stationnement, d'un processus de sortie de stationnement, d'un processus d'évitement ou d'un processus de manoeuvre.
